# FASCICULE DE BREVET EUROPEEN

(11) **EP 2 214 938 B1**
(45) Date de publication et mention de la délivrance du brevet: **18.04.2018**
(21) Numéro de dépôt: 08851760.2
(22) Date de dépôt: 18.11.2008
(51) Int. Cl.: B60S 1/52

(54) **BALAI D'ESSUYAGE POUR VITRES DE VEHICULE**
WISCHARM FÜR FAHRZEUGFENSTER
WIPER ARM FOR VEHICLE WINDOWS

(30) Priorité: 19.11.2007 FR 0708115
(43) Date de publication de la demande: 11.08.2010
(73) Titulaire: Valeo Systèmes d'Essuyage, 78322 Le Mesnil Saint Denis (FR)
(72) Inventeur: CAILLOT, Gérald, F-78720 CERNAY LA VILLE (FR); JARASSON, Jean-Michel, F-78990 ELANCOURT (FR); IZABEL, Vincent, F-91380 CHILLY MAZARIN (FR)
(86) Numéro de dépôt international: PCT/EP2008/065739
(87) Numéro de publication internationale: WO 2009/065821

(56) Documents cités:
- WO-A-2007/000346
- WO-A1-2009/033885
- DE-A1- 10 323 998
- DE-A1-102004 056 835
- DE-A1-102006 013 900
- FR-A- 2 648 771

## Description

La présente invention concerne un balai d'essuyage pour vitres de véhicule.

L'invention concerne également un accessoire pour un balai d'essuie-glace et un dispositif d'essuyage pour vitres de véhicule automobile intégrant un tel balai d'essuyage.

Il existe aujourd'hui une technologie de balais d'essuyage pour vitres de véhicule connue sous le nom de « balai plat » (ou « Flat Blade » en anglo-saxon) et dont un exemple de réalisation est décrit dans la demande internationale n° WO2007/000346.

Cette technologie « balai plat » consiste en une structure construite autour d'une pièce longitudinale monobloc constituée de deux parties fonctionnellement distinctes.

Une première partie est un support en matériau plastique semi-rigide et flexible comportant, d'une part, une cavité dans laquelle est logée une tige d'application de pression, généralement métallique, appelée également « vertèbre », et, d'autre part, une griffe portant la lame d'essuyage en élastomère.

Une deuxième partie de ladite pièce longitudinale monobloc est un accessoire destiné à améliorer la qualité de l'essuyage. Un premier type d'accessoire est, par exemple, un déflecteur aérodynamique qui utilise le vent relatif du véhicule pour augmenter la force de contact de la lame d'essuyage contre la surface vitrée à essuyer. Un autre type d'accessoire peut être un dispositif de projection d'un liquide de lavage approprié qui permet, par action conjuguée avec le mouvement de balayage de la lame d'essuyage, d'éliminer certaines particules solides pouvant se fixer sur les vitres, comme les projections de boue ou les résidus d'insectes écrasés contre le pare-brise.

La demande internationale précitée illustre un balai d'essuyage relevant de la technologie « balai plat » dont l'accessoire combine un déflecteur aérodynamique avec un dispositif de projection de liquide.

Actuellement, la pièce longitudinale complexe intégrant les fonctions de support et d'accessoire est obtenue par coextrusion d'au moins deux matériaux. Un premier matériau est un matériau plastique semi-rigide destiné à réaliser la fonction support proprement dite, tandis qu'au moins un autre matériau, comme un élastomère, est utilisé pour réaliser au moins une fonction accessoire : déflection aérodynamique et/ou projection de liquide, ou encore toute autre fonction.

Cependant, cette structure connue de « balai plat » présente de nombreux inconvénients.

En premier lieu, il faut observer que la pièce longitudinale monobloc servant à la fois de support et d'accessoire(s) est difficile à produire par coextrusion de matériaux différents et devant présenter un profil complexe. De plus, la rigidité du « balai » ainsi obtenu est augmentée du fait de l'ajout au support proprement dit de matière nécessaire à la réalisation des fonctions accessoires souhaitées. Cet inconvénient est encore plus sensible aux basses températures.

D'autre part, pour intercaler dans la structure coextrudée un connecteur de liaison au mécanisme d'entraînement du balai d'essuyage, il faut procéder à un découpage de la pièce en deux segments, ce qui pose le problème de leur raccordement au connecteur. Se pose également le problème de la continuité de la circulation de fluide entre les deux segments dans le cas où des canaux longitudinaux de transport de fluide de lavage sont intégrés à la structure.

Le document WO 2009/033885 A montre un balai d'essuyage selon le préambule de la première revendication.

Aussi, un but de l'invention est de proposer un balai d'essuyage du type « balai plat » qui serait de réalisation plus simple que la coextrusion actuellement mise en oeuvre, et qui éviterait les difficultés mentionnées plus haut concernant notamment le raccordement de segments d'accessoires entre eux et au connecteur central.

Ce but est atteint, conformément à l'invention, grâce à un balai d'essuyage pour vitres de véhicule, comprenant :
- un support longitudinal monobloc destiné à recevoir une tige de rigidification et une lame d'essuyage ; et
- un accessoire (40) d'essuyage portant un dispositif de distribution et de projection de liquide de nettoyage, ledit accessoire étant destiné à être assemblé au support longitudinal (10) ;
le support longitudinal (10) comprend des moyens de fixation dudit accessoire (40) sur ledit support, l'accessoire est une pièce indépendante du support.

Le balai conforme à l'invention est remarquable en ce que le support longitudinal comprend des moyens de fixation dudit accessoire (40) sur ledit support.

Ainsi, on comprend que le balai d'essuyage conforme à l'invention est organisé autour d'une pièce centrale, à savoir le support longitudinal, qui sert à recevoir non seulement la tige de rigidification, ou « vertèbre » et la lame d'essuyage, mais aussi un accessoire, par exemple, une déflecteur aérodynamique, présentant un dispositif de distribution et de projection de fluide. Dans le cadre de l'invention, l'accessoire est alors une pièce indépendante du support, mais auquel il peut être assemblé et fixé par des moyens appropriés. L'invention procède donc par séparation des fonctions réalisées par la seule pièce complexe monobloc connue de la demande internationale citée plus haut.

Les avantages de l'invention sont nombreux.

Contrairement aux systèmes « balai plat » connus, le support et l'accessoire peuvent être produits indépendamment l'un de l'autre, par extrusion simple, soit d'un matériau plastique semi-rigide pour le support, soit d'un élastomère, ou d'un matériau plastique, pour l'accessoire. Chaque pièce est donc beaucoup plus facile à réaliser.

D'autre part, le montage d'un balai d'essuyage de l'invention comprenant un connecteur central est extrêmement simple. Dans ce cas, il est prévu par l'invention que ledit accessoire d'essuyage est constitué de deux segments disposés sur le support de part et d'autre dudit connecteur central. Comme on le verra en détail plus loin, il suffit alors d'installer le connecteur sur le support longitudinal à l'endroit requis, puis d'assembler et fixer sur le support les deux segments d'accessoire de chaque côté du connecteur.

Cela permet par ailleurs une standardisation plus grande des pièces, par exemple, par la réalisation d'un support unique et adaptation d'un accessoire donné en fonction du balai d'essuyage.

Du fait que l'accessoire comprend un dispositif de distribution et de projection de liquide, par exemple réalisé sous la forme d'un canal longitudinal de transport dudit liquide, encore appelé rampe d'arrosage, l'invention prévoit des moyens de raccordement des canaux de transport de fluide desdits segments d'accessoire. La continuité de circulation de fluide entre les deux segments d'accessoire est ainsi assurée au niveau du connecteur par lesdits moyens de raccordement qui peuvent être un ou plusieurs tubes rigides insérés à chaque extrémité dans les canaux de transport des deux segments. En particulier, lesdits moyens de raccordement sont portés par ledit connecteur central.

On prévoit également que les moyens de raccordement soient directement intégrés ou fixés au connecteur central.

Par ailleurs, la flexibilité du balai d'essuyage conforme à l'invention peut être facilement améliorée, notamment à froid, du fait que ledit support longitudinal comporte des encoches transversales. On remarquera que ces encoches sont impossibles à obtenir avec la pièce monobloc connue de l'état de la technique où le support est co-extrudé avec l'accessoire. Sur le plan esthétique, les encoches du support ne sont pas visibles car masquées par l'accessoire après que celui-ci ait été assemblé sur le support.

Enfin, la réalisation en deux parties séparées, support et accessoire, du balai d'essuyage de l'invention, et leur assemblage par complémentarité de forme, offre la possibilité de créer une gamme complète de solutions autour du support comme élément central standard sur lequel on peut assembler un accessoire à la demande. Par exemple, pour des balais de vitre avant, il est possible de choisir pour accessoire un déflecteur aérodynamique d'une certaine forme. Pour des « balais » de vitre arrière, le même support standard que pour les « balais » avant peut recevoir comme accessoire un déflecteur aérodynamique d'une autre forme plus adaptée aux vitres arrières.

De nombreux modes de fixation de l'accessoire d'essuyage sur le support longitudinal peuvent être envisagés.

De manière très générale, on procède pour la fixation de l'accessoire au support par complémentarité de forme.

Selon un premier mode, lesdits moyens de fixation sont des moyens de clippage dudit accessoire sur ledit support.

Selon un deuxième mode, lesdits moyens de fixation sont des pattes longitudinales articulées ménagées sur ledit accessoire, aptes à être insérées dans des glissières extérieures ménagées sur ledit support.

Selon un troisième mode, lesdits moyens de fixation sont des moyens de retenue dudit accessoire dans des glissières ménagées sur ledit support. Parmi les moyens de retenue possibles, on notera qu'il est possible d'utiliser une coopération encoche/protubérance

Selon un quatrième mode, lesdits moyens de fixation comportent au moins un crochet latéral disposé sur ledit accessoire et aptes à enserrer ledit support.

Selon un cinquième mode, lesdits moyens de fixation sont constitués par un nervure longitudinale ménagée sur le dit support et présentant un profil de retenue apte à coopérer avec un profil de retenue conjugué d'une rainure longitudinale pratiquée dans ledit accessoire.

La description qui va suivre en regard des dessins annexés, donnés à titre d'exemples non limitatifs, fera bien comprendre en quoi consiste l'invention et comment elle peut être réalisée.
La figure 1a est une vue en coupe d'un balai d'essuyage selon l'invention.
La figure 1b est une vue en coupe illustrant un mode d'assemblage du système de la figure 1a.
La figure 2 est une vue en coupe d'une variante de réalisation du balai d'essuyage des figures 1a et 1b.
La figure 3 est une vue en coupe d'une variante de réalisation d'un balai d'essuyage selon l'invention.
La figure 4a est une vue en perspective partielle d'un balai d'essuyage selon l'invention.
La figure 4b est une vue en perspective du support longitudinal du balai d'essuyage de la figure 4a avant assemblage de l'accessoire.
La figure 4c est une vue de détail en perspective des moyens de fixation de l'accessoire d'essuyage de la figure 4a sur le support longitudinal de la figure 4b.
La figure 4d est une vue en perspective illustrant un mode d'assemblage du balai de la figure 4a après assemblage d'une partie d'accessoire.
La figure 5a est une vue en coupe d'une variante du balai d'essuyage de la figure 4a.
La figure 5b est une vue en perspective d'un assemblage possible d'un balai d'essuyage selon la figure 5a.
Les figures 5c et 5b sont des vues en coupe de variantes du balai d'essuyage de la figure 5a.
La figure 6 est une vue en coupe d'une autre variante du balai d'essuyage selon l'invention.
La figure 7 est une vue en coupe d'une autre variante du balai d'essuyage selon l'invention.
La figure 8 est une vue en coupe d'une variante du balai d'essuyage de la figure 7.
La figure 9 est une vue en coupe d'une autre variante du balai d'essuyage de la figure 7.

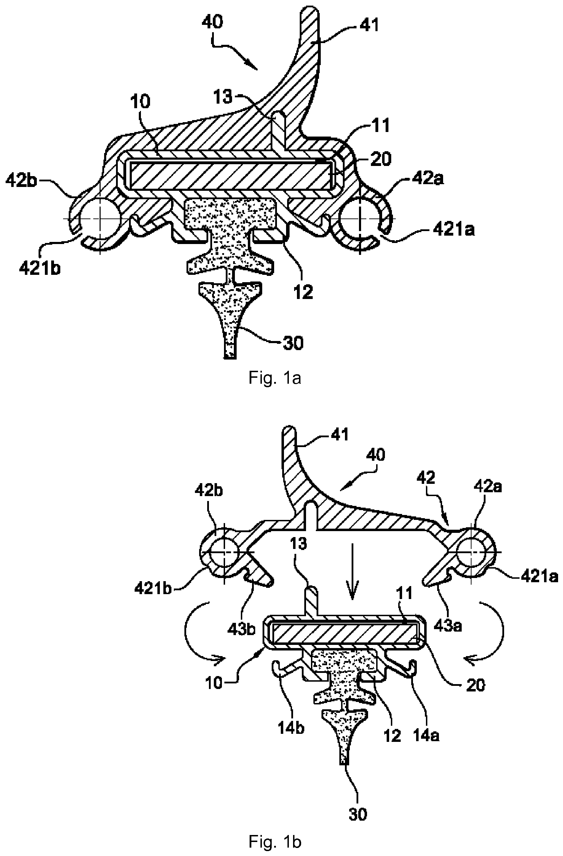

Sur la figure 1a est représenté en coupe un balai d'essuyage pour vitres de véhicules comprenant un support longitudinal 10 en matériau plastique semi-rigide extrudé. Ce support 10 comporte, conformément à la technologie « balai plat » (« Flat Blade »), une cavité 11 destinée à loger une tige métallique 20 d'application de pression, ou « vertèbre », de forme plane s'étendant sensiblement sur toute la longueur du balai d'essuyage. Le support 10 comporte également une griffe longitudinale 12 dans laquelle est introduite une lame 30 d'essuyage en élastomère.

Comme le montre la figure 1a, sur le support longitudinal 10 est assemblé et fixé un accessoire 40 réalisé par extrusion indépendamment du support 10. Dans l'exemple de la figure 1a, l'accessoire 40 est un déflecteur aérodynamique 41 comprenant un dispositif 42 de distribution et de projection de fluide constitué de deux canaux longitudinaux 42a, 42b percés de trous 421a, 421b afin de permettre la projection d'un liquide de lavage par exemple sur une vitre du véhicule. Les canaux longitudinaux 42a, 42b sont également appelés rampes d'arrosage.

L'accessoire 40 de la figure 1a est constitué d'un seul matériau, ici un élastomère extrudé. De manière générale, l'accessoire 40 d'essuyage est réalisé par extrusion au moins d'un élastomère ou d'au moins un matériau plastique.

On observera sur la figure 1a la présence sur le support 10 d'une nervure longitudinale 13 destinée à être insérée dans un logement de forme complémentaire. Cette nervure 13 permet, au besoin, de rigidifier le déflecteur aérodynamique 41 après assemblage sur le support 10.

La figure 1b illustre un mode particulier d'assemblage et de fixation de l'accessoire 40 sur le support longitudinal 10. Comme le montre cette figure, l'accessoire 40 est placé au-dessus du support 10, puis les flancs de l'accessoire portant les canaux 42a, 42b sont écartés élastiquement de manière à assembler verticalement les deux pièces 10 et 40 l'une sur l'autre. Les flancs sont ensuite relâchés, la fixation de l'accessoire 40 sur le support 10 étant réalisée par clippage d'éléments 43a, 43b d'accrochage de l'accessoire 40 dans des éléments conjugués 14a, 14b du support 10.

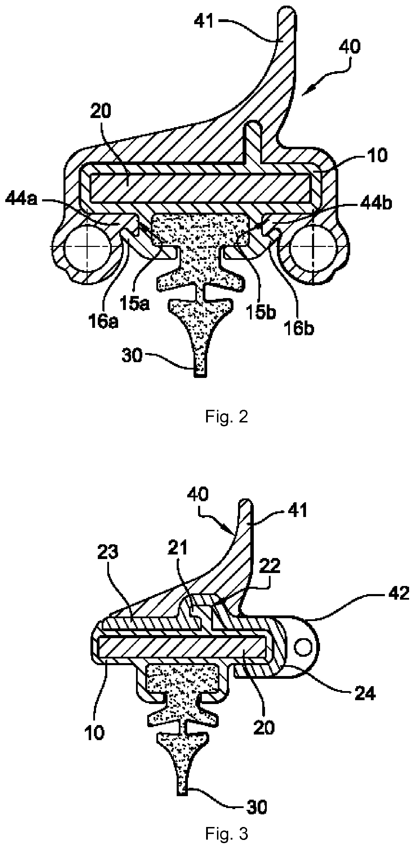

La figure 2 représente un balai d'essuyage similaire à celui des figures 1b et 1b. Dans le cas de la figure 2, l'assemblage est réalisé par coulissement de l'accessoire 40 le long du support au moyen de glissières 15a, 15b ménagées dans le support 10, la fixation des deux pièces étant assurée par des moyens 16a, 16b et 44a, 44b de retenue conjugués, ménagés respectivement sur le support 10 et l'accessoire 40.

La figure 3 est une variante de réalisation du balai d'essuyage de la figure 1a qui comprend un support longitudinal 10 sur lequel est assemblé et fixé un accessoire 40. L'accessoire 40, comme précédemment est réalisé par extrusion indépendamment du support 10. L'accessoire 40 est un déflecteur aérodynamique 41 comprenant un dispositif 42 de distribution et de projection de fluide. Dans le cas présent, le dispositif de distribution et de projection de fluide présente un unique canal longitudinal 42 permettant le transport le long du balai d'essuyage et la projection d'un liquide de lavage par exemple sur une vitre du véhicule.

Le support 10 présente, en son centre sur la vue de la figure 3, un crochet longitudinal 21. Ce crochet 21 est apte à être reçu dans un logement 22 de forme complémentaire au crochet 21, que présente l'accessoire 40.

Comme visible sur la figure 3, le logement 22 est réalisé dans une partie 23 de l'accessoire 40 opposée au déflecteur 41. Cette partie 23, encore appelé base, car formant la base du déflecteur 41 présente une rigidité différente de celle de l'ensemble du déflecteur. On préfèrera avoir une base 23 d'une rigidité plus importante pour assurer un meilleur maintien de l'accessoire 40 sur le support 10.

Ainsi, la coopération crochet 21 / logement 22 et la présence de la base 23 de plus grande rigidité permettent, après montage de l'accessoire 40 sur le support 10, un maintien sécurisé de l'accessoire 40 sur le support 10.

La base 23 est, par exemple, réalisée par coextrusion sur le déflecteur 41 pour former l'accessoire 40.

On notera que la base 23 présente également un crochet latéral 24 apte à enserrer ledit support 10 et permettant la fixation de l'accessoire 40 au support 10.

Le crochet latéral 24 porte, dans l'exemple présenté, le dispositif 42 de distribution et de projection de liquide.

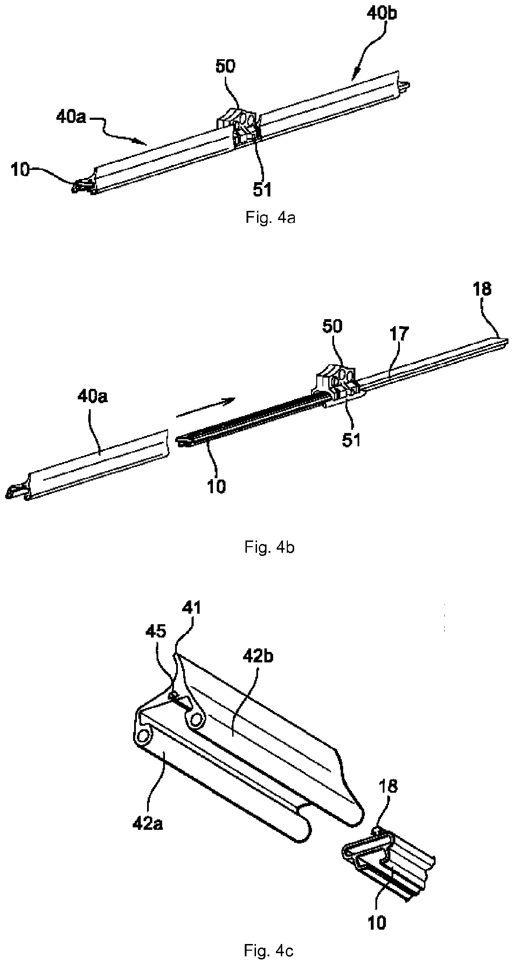

Les figures 4a à 4d présentent une variante de réalisation de l'invention et un principe de montage du balai d'essuyage.

La figure 4a montre une vue d'ensemble d'un balai d'essuyage comprenant un connecteur central 50 permettant la liaison avec le mécanisme d'entraînement du balai d'essuyage. Comme le montre la figure 4a, l'accessoire 40 est dans ce cas constitué de deux segments 40a, 40b disposés sur le support 10 de part et d'autre du connecteur central 50.

On a montré sur la figure 4b un support longitudinal 10 muni d'une pluralité de rainures transversales 17, ceci de manière à en augmenter la flexibilité. La réalisation de rainures transversales 17 peut être mise en oeuvre sur l'ensemble des supports des différents profils présentés dans cette description.

Cette figure permet également de voir comment est réalisé le montage du segment 40a sur le support 10.

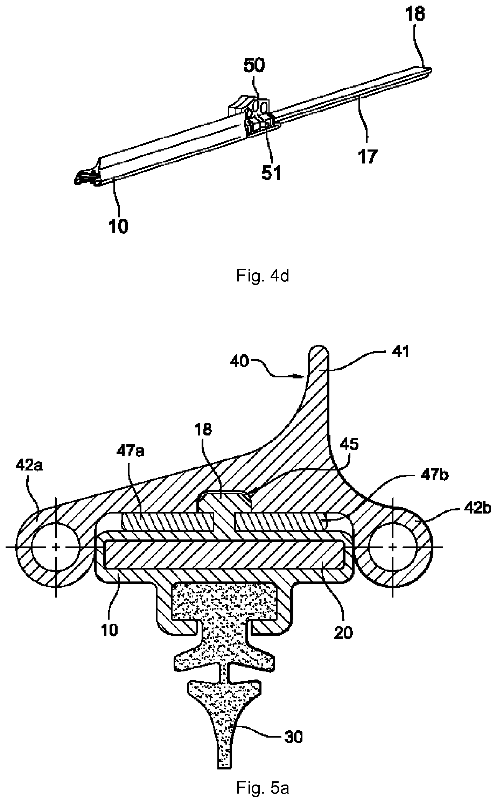

La figure 4c est une vue de détail montrant comment chaque segment 40a, 40b de l'accessoire 40 peut être fixé sur le support 10. Les moyens de fixation illustrés ici sont constitués, sur le support 10, d'une nervure longitudinale 18 portant un profil de retenue en queue d'aronde par exemple, et, sur l'accessoire 40, d'une rainure longitudinale 45 présentant un profil de retenue conjugué, également en queue d'aronde. Ainsi, comme on peut le voir sur la figure 4d, chaque segment 40a, 40b d'accessoire est assemblé sur le support 10 par coulissement de la nervure 18 dans la rainure 45, la fixation étant obtenue par la coopération des profils conjugués en queue d'aronde, ou tout autre profil de retenue connu. Cette complémentarité de forme entre la nervure 18 et la rainure 45 permet un bon ajustement entre l'accessoire 40 et le support 10.

On notera que la présence de la nervure 18 n'a pas d'influence sur la flexibilité acquise grâce aux rainures transversales 17 réalisées dans le support 10.

Dans l'exemple de réalisation des figures 4a à 4d, les segments 40a, 40b de la figure 4a présentent au moins un canal longitudinal de transport de fluide. Sur la figure 4c, on visualise deux canaux 42a, 42b longitudinaux de transport de fluide.

Du fait de la réalisation de l'accessoire sous forme de segments 40a, 40b, il est nécessaire, afin d'assurer la continuité de circulation du fluide le long de l'ensemble du système de nettoyage, de raccorder les canaux homologues de chaque segment. Cette exigence est satisfaite sur les figures 4a à 4d au moyen de tubes 51 portés par le connecteur central 50 et placés de chaque côté du connecteur en alignement avec les canaux de transport de fluide. Lors du montage, il suffit d'insérer les extrémités de chaque tube 51 dans les canaux correspondants.

Les figures 5a à 5c sont des variantes de réalisation du balai d'essuyage des figures 4a à 4d à nervure 18 et rainure 45 longitudinales.

Comme on peut le voir sur les figures 5a à 5c, l'accessoire 40 portant le dispositif de distribution et de transport de liquide est fixé sur le support 10 au moyen des deux pattes longitudinales 47a, 47b en matière plastique co-extrudé avec le déflecteur 41, lequel peut être également en matière plastique.

Dans la variante de la figure 5a, les pattes longitudinales 47a, 47b créent un effort de serrage contre la nervure 18 permettant ainsi d'améliorer la tenue mécanique de l'accessoire 40 sur le support 10.

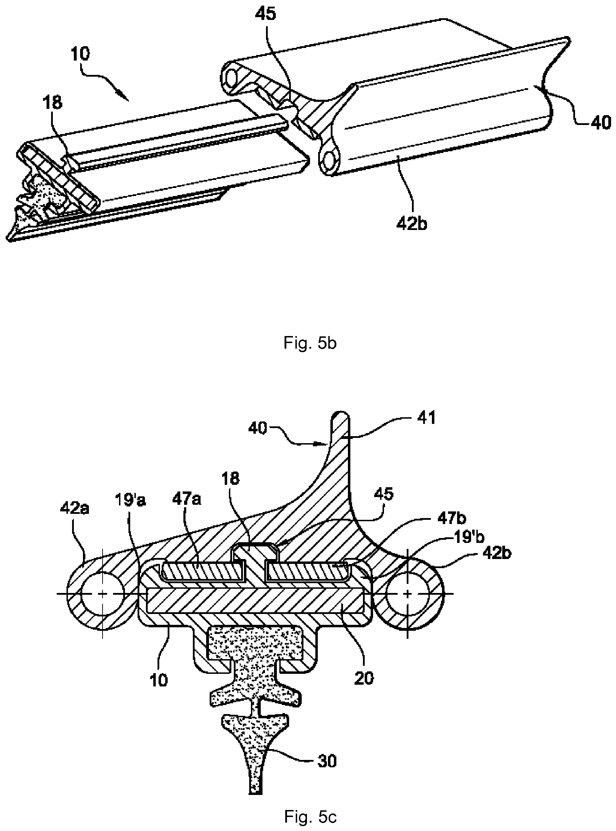

La figure 5b présente une possibilité d'assemblage de l'accessoire 40 sur le support 10 selon un mouvement d'insertion longitudinal.

Dans la variante de la figure 5c, les pattes longitudinales 47a, 47b coopèrent respectivement avec des rebords latéraux 19'a, 19'b.

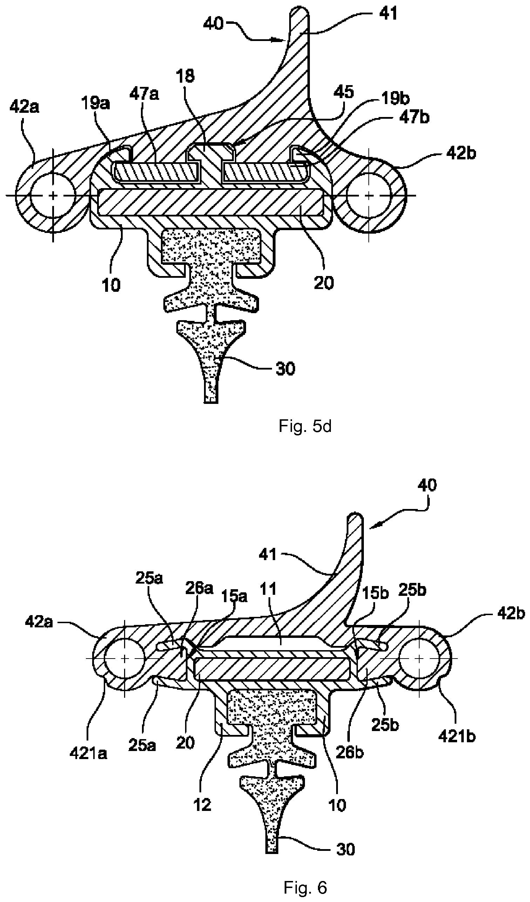

Dans la variante de la figure 5d, les pattes 47a, 47b s'insèrent respectivement dans des glissières extérieures 19a, 19b ménagées sur le support 10. De par la structure élastique du déflecteur 41, l'ensemble du système est mis sous contrainte à l'intérieur des glissières 19a, 19b.

Ainsi dans les cas des figures 5c et 5d, il n'est pas nécessaire de créer un serrage des pattes longitudinales contre la nervure 18.

La figure 6 présente une variante de réalisation du balai d'essuyage de la figure 2. On retrouve les éléments de structure du balai d'essuyage, à savoir, un support longitudinal 10 en matériau plastique semi-rigide extrudé comportant, une cavité 11 destinée à loger une tige métallique 20 d'application de pression, ou « vertèbre », de forme plane s'étendant sensiblement sur toute la longueur du balai d'essuyage, ainsi qu'une griffe longitudinale 12 dans laquelle est introduite une lame 30 d'essuyage en élastomère.

Le balai d'essuyage comporte également un accessoire destiné à être assemblé et fixé sur le support longitudinal 10.

Comme précédemment décrit, l'accessoire 40 est réalisé par extrusion indépendamment du support 10. Dans le cas présent, l'accessoire 40 est un déflecteur aérodynamique 41 comprenant un dispositif 42 de distribution et de projection de fluide constitué de deux canaux longitudinaux 42a, 42b percés de trous 421a, 421b afin de permettre la projection d'un liquide de lavage par exemple sur une vitre du véhicule. Les canaux longitudinaux 42a, 42b sont également appelés rampes d'arrosage. Dans le cas présent, les profils décrits présentent deux canaux de transport de liquide, mais il sera bien compris qu'un seul canal peut également convenir pour la réalisation de la fonction recherchée.

Selon l'invention, le support 10 comprend des moyens 15a, 15b formant glissières. Dans le cas présent, les moyens formant glissières 15a, 15b comprennent chacune deux languettes 25a, 25b formant un logement pour des ergots 26a, 26b appartenant à l'accessoire 40.

Les languettes 25a et 25b s'étendent longitudinalement sur le support 10 et sont disposées sur les bords latéraux de celui-ci.

Les ergots 26a et 26b sont, quant à eux, positionnés sur l'accessoire 40 pour venir se monter par coulissement longitudinal entre les languettes 25a et 25b se sorte à être maintenus entre ces dernières.

Ainsi, la fixation des deux pièces est ainsi assurée par des moyens 25a, 25b (languettes) et 26a, 26b (ergots), formant des moyens de retenue conjugués, ménagés respectivement sur le support 10 et l'accessoire 40.

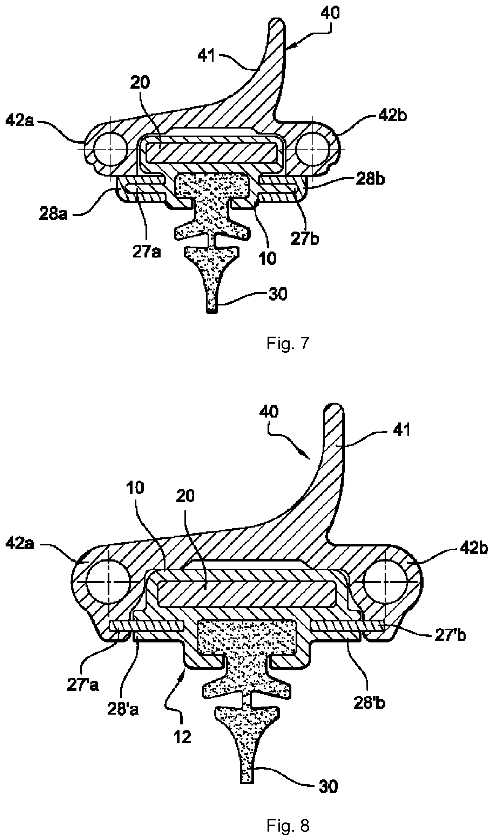

La figure 7 est une autre variante de l'invention dans laquelle le support 10 présente sur ses bords longitudinaux, au niveau de la griffe longitudinale 12 dans laquelle est introduite une lame 30 d'essuyage, deux protubérances 27a, 27b. Ces protubérances sont réalisées d'une seule pièce avec le support 10 et s'étendent longitudinalement sur toute la longueur du support.

Ces protubérances 27a, 27b sont destinées à être montées par coulissement longitudinal dans des encoches 28a, 28b réalisées sur la partie inférieure de l'accessoire 40 et s'étendant longitudinalement sur la longueur de l'accessoire 40.

Les encoches 28a et 28b sont en matière plastique et réalisées par co-extrusion avec le déflecteur 41, lequel peut être également en matière plastique. On préfèrera pour permettre une meilleure tenue des protubérances 27a, 27b dans les encoches 28a, 28b de réaliser les encoches dans un matériau plus rigide que le déflecteur 41.

La réalisation des encoches dans la zone inférieure de l'accessoire permet d'éviter toute perturbation sur le déflecteur 41. Cet en effet un avantage car cela permet d'utiliser des formes de déflecteur déjà existantes.

La figure 8 est une variante de la figure 7 dans laquelle c'est le support 10 qui porte des encoches 28'a, 28'b et l'accessoire 40 qui porte des protubérances 27'a, 27'b. Le positionnement de ces éléments est assez similaire à celui de la figure 7. De la même façon que précédemment, les protubérances 27'a, 27'b que porte l'accessoire 40 sont co-extrudés avec l'accessoire lui-même.

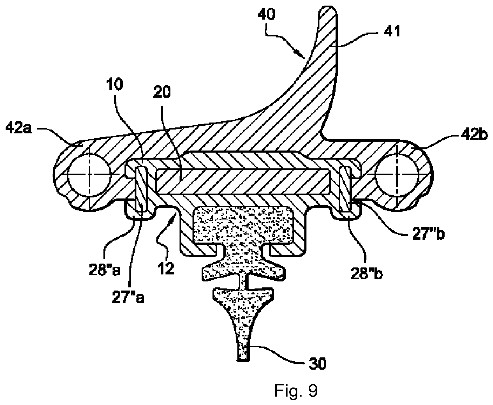

La figure 9 est une variante de la figure 8 dans laquelle le support porte des encoches 28"a, 28"b mais celles-ci sont disposés selon une orientation différente, au niveau de la vue en coupe, par rapport aux encoches du support de la figure 8. En effet, sur la figure 9, les encoches 28"a et 28"b sont orientées verticalement par rapport à celles de la figure 8.

De la même manière, l'accessoire 40 présente des protubérances 27"a, 27"b disposées selon une orientation différente au niveau de la vue en coupe, par rapport aux protubérance de l'accessoire de la figure 8. Dans le cas présent de la figure 9, les protubérances sont disposées selon une orientation verticale.

Comme précédemment, les protubérance 27"a, 27"b sont co-extrudées avec de déflecteur 41 formant l'accessoire 40.

La description des exemples ci-dessus a permis de montrer sur quelques exemples particuliers, non limitatifs, comment il est possible de réaliser une large gamme de balais d'essuyage de type « balai plat » en associant de diverses manière et de manière sécurisée, un même support 10 à un accessoire 40 présentant un dispositif de distribution et de projection de liquide, et ceci aussi bien pour un balai d'essuyage pour vitres avant (a) que pour vitres arrière (b).

## Revendications

1. Balai d'essuyage pour vitres de véhicule, comprenant
- un support longitudinal (10) destiné à recevoir une vertèbre (20) d'application de pression et une lame (30) d'essuyage ;
- un accessoire (40) d'essuyage portant un dispositif (42a, 42b) de distribution et de projection de liquide de nettoyage, ledit accessoire étant destiné à être assemblé au support longitudinal (10) ; le support longitudinal (10) comprend des moyens de fixation dudit accessoire (40) sur ledit support, l'accessoire (40) est une pièce indépendante du support (10) **caractérisé en ce que** lesdits moyens de fixation :
- sont des moyens (43a, 43b, 14a, 14b) de clippage dudit accessoire (40) sur ledit support (10), ou
- sont des moyens (16a, 16b, 21, 25a, 25b, 27a, 27b, 44a, 44b, 22, 26a, 26b, 28a, 28b) de retenue dudit accessoire (40) dans des glissières (15a, 15b) ménagées sur ledit support (10), ou
- sont constitués par une nervure longitudinale (18) ménagée sur le dit support (10) et présentant un profil de retenue apte à coopérer avec un profil de retenue conjugué d'une rainure longitudinale (45) pratiquée dans ledit accessoire (40).

2. Balai selon la revendication 1, dans lequel ledit accessoire (40) comporte un déflecteur aérodynamique (41).

3. Balai selon l'une des revendications 1 ou 2, dans lequel ledit dispositif (42a, 42b) de distribution et de projection de liquide comprend au moins un canal longitudinal (42a, 42b) d'arrosage.

4. Balai selon l'une quelconque des revendications 1 à 3, dans lequel ledit support longitudinal (10) comporte des rainures transversales (17) pour augmenter sa flexibilité.

5. Balai selon l'une quelconque des revendications 1 à 4, dans lequel lesdits moyens de fixation sont agencés à la fois sur accessoire (40) sur ledit support (10) et coopèrent par complémentarité de forme.

6. Balai selon la revendication précédente **caractérisé en ce que** les moyens de retenue comportent au moins une protubérance (27a, 27b, 27'a, 27'b, 27"a, 27"b) destinée à coopérer avec au moins une encoche (28a, 28b, 28'a, 28'b, 28"a, 28"b).

7. Balai selon l'une des revendications précédentes **caractérisé en ce que** les moyens de retenue disposés sur l'accessoire (40) sont réalisés par co-extrusion avec l'accessoire (40).

8. Balai selon l'une des revendications précédentes **caractérisé en ce que** les moyens de retenue comportent un logement (22) destiné à recevoir un crochet (21).

9. Balai selon l'une des revendications précédentes, dans lequel lesdits moyens de fixation sont des pattes longitudinales (47a, 47b) ménagées sur ledit accessoire (40), aptes à être insérées au niveau de la nervure longitudinale (18) ménagées sur ledit support (10).

10. Balai selon la revendication 9, dans lequel les pattes longitudinales (47a, 47b) forment des pattes de serrage contre ladite nervure longitudinale (18).

11. Balai selon la revendication 10, dans lequel les pattes longitudinales (47a, 47b) forment des pattes de retenue aptes à coopérer avec des moyens (19a, 19b ; 19'a, 19'b) de maintien conjugués ménagés sur ledit support (10).

12. Balai selon la revendication 11, dans lequel lesdits moyens de maintien sont des rebords latéraux (19'a, 19'b).

13. Balai selon la revendication 11, dans lequel lesdits moyens de maintien sont des glissières latérales (19a, 19b).

14. Balai selon l'une quelconque des revendications 2 à 13, dans lequel ledit support (10) comporte une nervure longitudinale (13) de rigidification dudit déflecteur aérodynamique (41).

15. Balai selon l'une quelconque des revendications 1 à 14, dans lequel, ledit système comprenant un connecteur central (50), ledit accessoire (40) d'essuyage est constitué de deux segments (40a, 40b) disposés sur le support (10) de part et d'autre dudit connecteur central (50).

16. Balai selon les revendications 3 et 15, comprenant des moyens de raccordement (51 ; 52) des canaux (42a, 42b) de transport de fluide desdits segments (40a, 40b) d'accessoire.

17. Balai selon la revendication 16, dans lequel lesdits moyens de raccordement (51) sont portés par ledit connecteur central (50).

18. Dispositif d'essuyage notamment pour un pare-brise de véhicule automobile, **caractérisé en ce qu'**il comporte un balai d'essuyage selon l'une quelconque des revendications 1 à 17.

## Patentansprüche

1. Scheibenwischerblatt für Fahrzeugfenster, das enthält
- einen Längsträger (10), der dazu bestimmt ist, einen Rückenstreifen (20) zur Ausübung von Druck und einen Wischergummi (30) aufzunehmen;
- ein Wisch-Zubehörteil (40), das eine Vorrichtung (42a, 42b) zur Ausgabe und zum Spritzen einer Reinigungsflüssigkeit trägt, wobei das Zubehörteil dazu bestimmt ist, an den Längsträger (10) montiert zu werden; der Längsträger (10) Einrichtungen zur Befestigung des Zubehörteils (40) am Träger enthält, das Zubehörteil (40) ein vom Träger (10) unabhängiges Bauteil ist,
**dadurch gekennzeichnet, dass** die Befestigungseinrichtungen:
- Einrichtungen (43a, 43b, 14a, 14b) zum Einklinken des Zubehörteils (40) auf den Träger (10) sind, oder
- Einrichtungen (16a, 16b, 21, 25a, 25b, 27a, 27b, 44a, 44b, 22, 26a, 26b, 28a, 28b) für den Rückhalt des Zubehörteils (40) in auf dem Träger (10) vorgesehenen Gleitschienen (15a, 15b) sind, oder
- aus einer Längsrippe (18) bestehen, die auf dem Träger (10) vorgesehen ist und ein Rückhalteprofil aufweist, das mit einem zugeordneten Rückhalteprofil einer Längsrille (45) zusammenwirken kann, die im Zubehörteil (40) angebracht ist.

2. Blatt nach Anspruch 1, wobei das Zubehörteil (40) einen aerodynamischen Windabweiser (41) aufweist.

3. Blatt nach einem der Ansprüche 1 oder 2, wobei die Vorrichtung (42a, 42b) zur Ausgabe und zum Spritzen von Flüssigkeit mindestens einen Besprühungs-Längskanal (42a, 42b) enthält.

4. Blatt nach einem der Ansprüche 1 bis 3, wobei der Längsträger (10) Querrillen (17) aufweist, um seine Biegsamkeit zu erhöhen.

5. Blatt nach einem der Ansprüche 1 bis 4, wobei die Befestigungseinrichtungen sowohl auf dem Zubehörteil (40) als auch auf dem Träger (10) ausgebildet sind und durch Formkomplementarität zusammenwirken.

6. Blatt nach dem vorhergehenden Anspruch, **dadurch gekennzeichnet, dass** die Rückhalteeinrichtungen mindestens einen Vorsprung (27a, 27b, 27'a, 27'b, 27"a, 27"b) aufweisen, der dazu bestimmt ist, mit mindestens einer Kerbe (28a, 28b, 28'a, 28'b, 28"a, 28"b) zusammenzuwirken.

7. Blatt nach einem der vorhergehenden Ansprüche, **dadurch gekennzeichnet, dass** die auf dem Zubehörteil (40) angeordneten Rückhalteeinrichtungen durch Co-Extrusion mit dem Zubehörteil (40) hergestellt werden.

8. Blatt nach einem der vorhergehenden Ansprüche, **dadurch gekennzeichnet, dass** die Rückhalteeinrichtungen eine Aufnahme (22) aufweisen, die dazu bestimmt ist, einen Haken (21) aufzunehmen.

9. Blatt nach einem der vorhergehenden Ansprüche, wobei die Befestigungseinrichtungen auf dem Zubehörteil (40) vorgesehene Längsklauen (47a, 47b) sind, die im Bereich der auf dem Träger (10) vorgesehenen Längsrippe (18) eingefügt werden können.

10. Blatt nach Anspruch 9, wobei die Längsklauen (47a, 47b) Klauen zum Andrücken gegen die Längsrippe (18) formen.

11. Blatt nach Anspruch 10, wobei die Längsklauen (47a, 47b) Rückhalteklauen formen, die mit auf dem Träger (10) vorgesehenen zugeordneten Halterungseinrichtungen (19a, 19b; 19'a, 19'b) zusammenwirken können.

12. Blatt nach Anspruch 11, wobei die Halterungseinrichtungen seitliche Randleisten (19'a, 19'b) sind.

13. Blatt nach Anspruch 11, wobei die Halterungseinrichtungen seitliche Gleitschienen (19a, 19b) sind.

14. Blatt nach einem der Ansprüche 2 bis 13, wobei der Träger (10) eine Längsrippe (13) zur Versteifung des aerodynamischen Windabweisers (41) aufweist.

15. Blatt nach einem der Ansprüche 1 bis 14, wobei, da das System einen zentralen Verbinder (50) enthält, das Wisch-Zubehörteil (40) aus zwei Segmenten (40a, 40b) besteht, die auf dem Träger (10) zu beiden Seiten des zentralen Verbinders (50) angeordnet sind.

16. Blatt nach den Ansprüchen 3 und 15, der Anschlusseinrichtungen (51; 52) der Fluiddtransportkanäle (42a, 42b) der Zubehörteil-Segmente (40a, 40b) enthält.

17. Blatt nach Anspruch 16, wobei die Anschlusseinrichtungen (51) vom zentralen Verbinder (50) getragen werden.

18. Wischvorrichtung, insbesondere für eine Windschutzscheibe eines Kraftfahrzeugs, **dadurch gekennzeichnet, dass** sie ein Wischerblatt nach einem der Ansprüche 1 bis 17 aufweist.

## Claims

1. A wiper blade assembly for the windows of a motor vehicle comprising:
- a longitudinal support (10) intended to receive a pressure application vertebra (20) and a wiper blade (30) ;
- a wiper accessory (40) carrying a device (42a, 42b) for distributing and projecting a washer liquid, said accessory being intended to be assembled with the longitudinal support (10);
the longitudinal support (10) comprises means for fixing said accessory (40) on said support, the accessory is a part independent from the support, **characterized in that** said fixing means :
- are means (43a, 43b, 14a, 14b) for clipping said accessory (40) on said support (10), or
- are means (16a, 16b, 21, 25a, 25b, 27a, 27b, 44a, 44b, 22, 26a, 26b, 28a, 28b) for retaining said accessory (40) in slides (15a, 15b) provided on said support (10), or
- are composed of a longitudinal rib (18) provided on said support (10) having a retaining profile able to cooperate with a combined retaining profile of a longitudinal groove (45) provided in said accessory (40).

2. A wiper blade assembly according to claim 1, wherein said accessory (40) includes a wind deflector (41) .

3. A wiper blade assembly according to one of claims 1 or 2, wherein said device (42a, 42b) for distributing and projecting the liquid comprises at least one spraying longitudinal channel (42a, 42b).

4. A wiper blade assembly according to any one of claims 1 to 3, wherein said longitudinal support (10) includes transversal grooves (17) so as to increase its flexibility.

5. A wiper blade assembly according to any one of claims 1 to 4, wherein said fixing means are both arranged on the accessory (40) and on said support (10) and cooperate through a complementary shape thereof.

6. A wiper blade assembly according to the preceding claim, **characterised in that** the retaining means include at least one protrusion (27a, 27b, 27'a, 27'b, 27"a, 27"b) intended to cooperate with at least one notch (28a, 28b, 28'a, 28'b, 28"a, 28"b).

7. A wiper blade assembly according to any one of the preceding claims,**characterised in that** the retaining means positioned on the accessory (40) are made by co-extrusion with the accessory (40).

8. A wiper blade assembly according to any one of the preceding claims, **characterised in that** the retaining means include a recess (22) intended to receive a hook (21).

9. A wiper blade assembly according to any one of the preceding claims,, wherein said fixing means are longitudinal lugs (47a, 47b) provided on said accessory (40), able to be inserted at the level of the longitudinal rib (18) provided on said support (10).

10. A wiper blade assembly according to claim 9, wherein said longitudinal lugs (47a, 47b) form clamping lugs against said longitudinal rib (18).

11. A wiper blade assembly according to claim 10, wherein the longitudinal lugs (47a, 47b) form retaining lugs able to cooperate with combined holding means (19a, 19b; 19'a, 19'b) provided on said support (10).

12. A wiper blade assembly according to claim 11, wherein said holding means are side rims (19'a, 19'b).

13. A wiper blade assembly according to claim 11, wherein said holding means are side slides (19a, 19b).

14. A wiper blade assembly according to any one of claims 2 to 13, wherein said support (10) includes a longitudinal rib (13) for stiffening said wind deflector (41).

15. A wiper blade assembly according to any one of claims 1 to 14, wherein said system including a central connector (50), said wiper accessory (40) is composed of two segments (40a, 40b) positioned on the support (10), on either side of said central connector (50).

16. A wiper blade assembly according to claims 3 and 15, including means for connecting (51; 52) the fluid transport channels (42a, 42b) of said accessory segments (40a, 40b).

17. A wiper blade assembly according to claim 16, wherein said connecting means (51) are carried by said central connector (50).

18. A wiper device, more particularly for the windshield of a motor vehicle, **characterised in that** it includes a wiper blade according to any one of claims 1 to 17.
